# EUROPEAN PATENT APPLICATION

(11) **EP 2 071 898 A1**
(43) Date of publication of application: **17.06.2009**
(21) Application number: 07122742.5
(22) Date of filing: 10.12.2007
(51) Int. Cl.: H04W 88/02, H04W 12/10

(54) **Method for alteration of integrity protected data in a device, computer program product and device implementing the method**

(71) Applicant: TELEFONAKTIEBOLAGET LM ERICSSON (publ), 164 83 Stockholm (SE)
(72) Inventor: Johansson, Mikael, 237 91, BJÄRRED (SE); Stahl, Per, 218 51, KLAGSHAMN (SE)
(74) Representative: Bratt, Hanna Catharina

(57) **Abstract**

The invention relates to a method for enabling modifications of integrity protected data, such as SIM lock settings, in a device. The method comprises: in a device, creating a data entity containing signed change information about allowable alterations, the change information being bound to the device, a certificate with a public key corresponding to the private key used to sign the change information; accessing the device and requesting alteration; verifying the requested alteration against the data entity; and if the verification succeeds, performing the requested alteration. By centrally preparing dedicated replacement devices, which locally can be altered in a simple and secure way, without compromising sensitive information or data, a more secure handling of alterations is achieved. Also, the invention relates to a corresponding computer program product and a device implementing the method.

## Description

### Technical field

The present invention relates to alteration of integrity protected data in a device. More particularly, the invention relates to a method for enabling modifications on SIM lock of mobile equipment and generally enabling alteration of integrity protected data in a device. Also, the invention relates to a corresponding computer program product and a device implementing the method.

### Background

The mobile equipment (ME) industry, mobile telecommunications operators especially, rely on subsidies where the end-users sign contracts so that they do not have to pay full price for an ME but instead are bound to the specific operator for a certain time period e.g. 18 months. To facilitate this business model, the ME has what is called a Subscriber Identity Module (SIM) lock (See 3GPP TS 22.022 Personalization of Mobile Equipment (ME); Mobile functionality specification).

SIM lock is a capability built in to the ME such as GSM or UMTS telephones, and in corresponding modules in computers, by manufacturers. This capability is utilized to restrict the use of the ME to specific countries and network providers.

The ME hardware can be locked to only accept SIM cards from one or more of the following:
- Countries, and/or
- Network providers, and/or
- Service providers, and/or
- SIM types.

If an end-user's ME is malfunctioning in any way it may have to be replaced but then it is very important for the operator that a SIM lock is present in the replacement ME similar to the one in the malfunctioning ME. If this is possible then the end-user may right away get a replacement ME and the malfunctioning ME is sent away to a more advanced service center where it may be repaired. The replacement ME that is provided to the end-user is hereafter denoted as a "swap" or replacement phone or device.

The swap phone is a ME that lies on the shelf at a service center ready to be swapped with a malfunctioning ME. The swap phone may already have a SIM lock programmed but this SIM lock may also need to be reprogrammed with the same SIM lock as of the malfunctioning ME so that the end-user's swap phone is still bound to the same operator's SIM card with the same SIM lock settings.

The functionality to change SIM lock on a ME is sensitive and must be limited to avoid that this kind of functionality leaks and turns up in the hands of malicious users. The ME requires some kind of authentication to allow change of SIM lock. Such authentication usually involves access to an authentication key residing on a server, in a dongle, in a smart card, etc.

Further, the ME software is integrity protected, i.e. it is not possible to patch the software to skip the authentication step.

For ME manufacturers with a large service organization where change of SIM lock is supported at thousands of locations all over the world it is desirable not to give authentication rights for SIM lock change to all these locations since there is a risk of misuse. The right could be misused in that an authentication key leaks out or that an illegal service for unlocking SIM locked phones or altering other integrity protected data, such as International Mobile Equipment Identity (IMEI), is put up. Once the ME has authenticated a PC-tool used for the SIM lock change it is free to change the SIM lock of the ME to any value. It is therefore desirable to allow SIM lock change only on dedicated swap phones available at the service centers without giving the right to authenticate and change SIM lock of any end-user ME.

There is also a desire to be able to alter any integrity protected data, such as customization and personalization data in a mobile device in a secure manner.

### Prior art

US patent No. 6,124,799 discloses a method for locking and unlocking mobile equipment provided with SIM capability. The operation of the mobile equipment is to be locked and unlocked with respect to an identity corresponding to the ID on the SIM. A key or algorithm specific to the mobile equipment is employed for producing, as a function of an identity stored on the SIM, a checkword corresponding to a codeword stored in the SIM in order to change the SIM lock.

US patent No. 6,259,908 discloses a method for limiting access to data stored in mobile equipment. A subsidy lock code is defined in the mobile equipment before activating the mobile equipment in the cellular network. A entity must demonstrate knowledge about the subsidy lock code to activate the mobile equipment in the network.

Neither of the documents does address the problem of preparing replacement mobile equipment for subsequent change of SIM lock settings or other data.

### Summary of the invention

By centrally preparing dedicated replacement devices or modules, which locally can be altered in a simple and secure way, without compromising sensitive information or data, a more secure handling of alterations is achieved.

In a first aspect, the invention provides a method for alteration of integrity protected data in a device.

The method comprises the following steps: in the device, creating and storing a data entity containing signed change information about allowable alterations, the change information being bound to the device, a certificate with a public key corresponding to the private key used to sign the change information; accessing the device and requesting alteration; verifying the requested alteration against the data entity (23); if the verification succeeds, performing the requested alteration.

Preferably, the method further comprises: verifying the signature of the data entity; and verifying that the data entity is bound to the device, before performing the requested alteration.

Suitably, the data entity contains a device unique value.

The data entity may contain a chip unique MAC calculated over the data entity.

Suitably, the method further comprises: if the verification succeeds, disabling further alterations by deleting or alteration of the data entity.

The data entity may further comprise password information, wherein accessing the device further comprises inputting a password, which is checked by the device against the password information of the data entity.

The requested alteration may comprise a change of SIM lock or a change of IMEI.

In a second aspect, the invention provides a computer program product comprising a data entity containing signed change information about allowable alterations for alteration of integrity protected data in a device, the change information being bound to the device, and a certificate with a public key corresponding to the private key used to sign the change information.

Suitably, the data entity contains a device unique value, such as an IMEI.

Also, the data entity may contain a chip unique MAC calculated over the data entity.

The data entity may further comprises password information.

In a third aspect, the invention provides a computer program product, comprising a computer-readable medium having stored thereon the data entity.

In a fourth aspect, the invention provides a device comprising a computer program product as mentioned above.

The invention is defined in the appended independent claims, while preferred embodiments are set forth in the dependent claims.

Embodiments of the invention e.g. allow service centers to perform update of SIM lock data and other integrity protected data, e.g. customization/personalization data, on dedicated replacement devices without distributing sensitive keys such as authentication keys that would allow update of SIM lock data and other integrity protected data on any ME.

Embodiments of the invention will now be described more in detail in connection with the enclosed drawings.

### Brief description of the drawings

Figure 1 illustrates a device according to an embodiment of the invention.
Figure 2 illustrates relevant contents of a memory of a device of an embodiment of the invention.
Figure 3 illustrates a flow chart of method steps of an embodiment of the invention.

### Detailed description of preferred embodiments

The invention will be described with reference to a device, such as a mobile telephone, having integrity protected customization/personalization or other data. A particular example is SIM lock settings. As mentioned in the introduction, the SIM lock settings restrict the use of the phone as wanted by the operator, and the operator wants the settings to be altered only by authorized persons and in specified ways. According to the invention, dedicated replacement or "swap" phones may be provided. However, the invention is not only applicable to SIM lock settings, but can be used for altering any data, such as International Mobile Equipment Identity (IMEI), and is especially useful when altering data which is stored integrity protected in a device.

A similar type of connectivity lock may also be provided in computers, such as PCs and laptops, and mobile equipment in cars etc, which e.g. lock restricts connection to certain networks. In this case the connection function often resides in a module which may need replacement in the same way as the mobile phone discussed below.

An embodiment of the invention is to limit the SIM lock change only to replacement phones by having these replacement phones prepared in advance, for example at a few selected advanced service centers. The replacement phone is provided with "an egg", a data entity, which is also integrity protected, which allows a specified change of the SIM lock. The ability to create the egg is limited to a few selected advanced service centers which are trusted to create and insert the egg into the mobile device.

By the embodiments of the invention there is a limitation of the access to the authentication key itself needed to alter SIM lock or other sensitive data. Since the SIM lock to be programmed at the service centers may not be known when the egg is planted into the ME there is no way of exactly controlling what SIM lock will be programmed into the replacement phone but it is possible to partly specify the SIM lock settings such that for example the Mobile Country Code (MCC) and Mobile Network Code (MNC) must match that of the intended operator.

As is discussed more in detail below, a replacement phone prepared with an egg may be changed at a local service station e.g. having a PC tool for accessing the replacement phone. The PC tool is only capable of altering a phone provided with an egg in the specified way. Also, the authenticity of the egg, and that the egg is associated with the individual replacement phone is checked.

Therefore, any malicious user obtaining access to the PC tool for changing a SIM lock can only reprogram phones containing an egg, i.e. only replacement phones and not any other SIM locked ME. The egg is bound to the ME by means of a hardware binding such that it cannot be copied from one ME to another. It is furthermore possible to limit the programming of replacement phones using a password such that stolen replacement phones cannot be re-programmed by malicious users without knowing the password.

Moreover, the embodiments of the invention comprise not only use for update of SIM lock information but also for use for update of any other data, e.g. customization/personalization data. In one embodiment even the IMEI may be altered which is allowed on some markets.

A detailed technical description of the embodiments of the invention is as follows:

It should be emphasized that the term "comprises/comprising" when used in this specification is taken to specify the presence of stated features, integers, steps or components but does not preclude the presence or addition of one or more other features, integers, step, components or groups thereof.

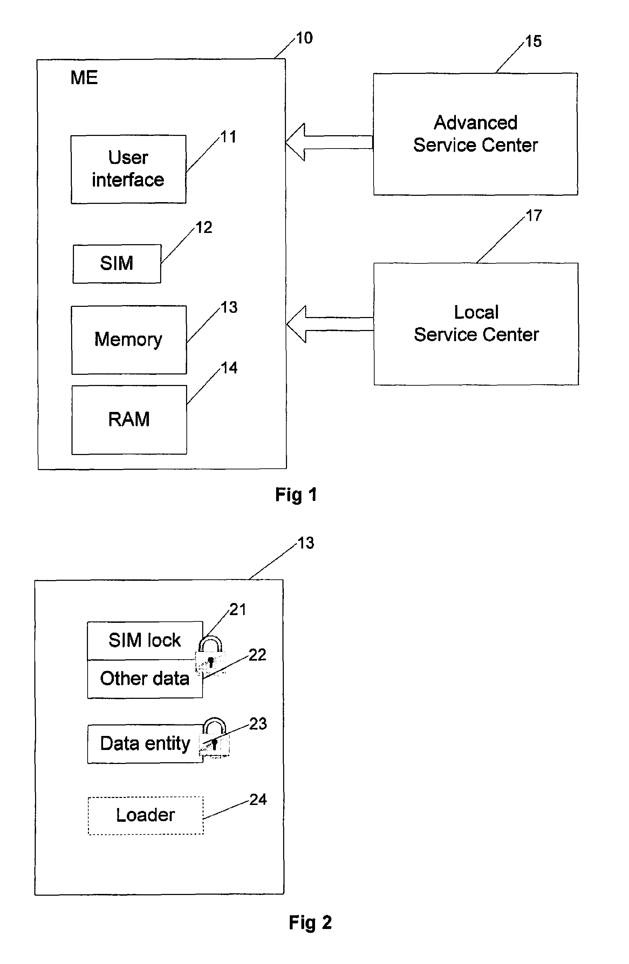

Figure 1 illustrates schematically mobile equipment (ME) 10, such as a mobile telephone. Only parts relevant to the invention are outlined while other components may be conventional. The phone 10 is provided with a user interface 11 comprising a keypad and a display for interaction with a user as well as communication ports. The phone 10 is provided with a reader for cooperation with a SIM and non-volatile memory means 13, such as a flash memory in a mobile device or a hard disk in a computer, containing necessary software and data, and a working memory 14 (Random Access Memory, RAM).

Devices intended to be replacement phones are prepared by an advanced service centre 15 which is trusted and then sent to a local service centre 17 which has limited rights and capabilities to change the device 10. The phone may be prepared in the same way already at the factory.

Figure 2 illustrates some of the contents of the non-volatile memory 13. SIM lock settings 21 and other data 22 are stored integrity protected as is conventional. As explained below, the advanced service centre 15 stores a data entity 23, the egg, also integrity protected. The integrity protection is indicated by the padlock symbols.

The ME software is integrity protected such that it is not possible to modify the software. This integrity protection can be obtained by using digitally signed software that is verified e.g. at every start-up of the ME. Furthermore, there exist dedicated programs that may be downloaded from a PC to the RAM in the ME 10 to perform service of the ME e.g. updating the ME with new software. These programs are called loaders and are also required to be digitally signed. A loader is shown at numeral 24.

The SIM lock settings describe whether a particular SIM lock is activated or not. (See 3GPP TS 22.022: Personalization of Mobile Equipment (ME); Mobile functionality specification, for further information on different SIM locks.) If a SIM lock is activated, the settings define to what values the SIM lock is locked. This information is stored integrity protected in the ME as indicated at 21. The integrity protection is calculated using a chip unique hardware key and can only be calculated by the ME.

The data entity or egg 23 is stored in the persistent memory 13, e.g. in a file system, in the ME. The egg consists of digitally signed change information and a certificate containing a public key that corresponds to the private key used to sign the change information.

If the ME software needs to be accessed, only advanced service centers as indicated at 15 are trusted. The advanced service centers may authenticate themselves and sign the data entity 23 e.g. by means of the well known asymmetric encryption method. This involves a challenge-response protocol wherein the advanced service centre 15 has access to a private key and creates a digital signature on a challenge created by the device. The signature is then verified by the device using the corresponding public key known to and trusted by the device. The authentication can also be made using a challenge-response protocol involving a shared symmetric secret key. When the advanced service centre 15 has authenticated itself, it can create and sign the data entity 23 with a private key (which may be the same key as used for the authentication, or a different key/key pair known and trusted by the device can be used). In this way, the data entity 23 is digitally signed.

If the phone is prepared already at the factory there might not be a need for the authentication step, since the phone may be totally accessible during a development state, but the data entity 23 should be signed so it can be verified.

Besides the data entity 23 being digitally signed, the data entity 23 is also bound to the ME hardware, such that it is not possible to copy the data entity 23 to another device and use it to change that device. To achieve this it is suitable to include a device unique ID value into the data being signed. For example, the data entity may contain the IMEI, International Mobile Equipment Identity, or another device unique value. For certain markets, the IMEI value are allowed to be changed and in this case the IMEI cannot be used to bind the data entity to an individual device.

Alternatively, or if there is no device unique ID that can be used, it is possible to bind the data entity to the device by calculating a chip unique Message Authentication Code (MAC) over the egg data. The MAC is calculated on the signed object including the signature and the MAC value is appended to the signed object. In this case, the result will be the data entity 23. This MAC is calculated at the advanced service center 15 and the calculation is limited such that it can only be performed by authenticated users using special restricted tools not available at the regular (local) service centers 17 performing the replacement of the ME 10.

In one embodiment, the change information contains the following information:
- IMEI of the replacement phone (or another device unique ID value or a MAC),
- Optional: Information that SIM lock data is allowed to be exchanged once, and
- Optional: one way hash (e.g. SHA-1 hash) of a password used to protect the SIM lock data update.

Alternatively, the information could be defined such as it could be possible to alter the data repeatedly. In a typical case, the alteration of the device 10 would automatically invalidate or consume the data entity 23.

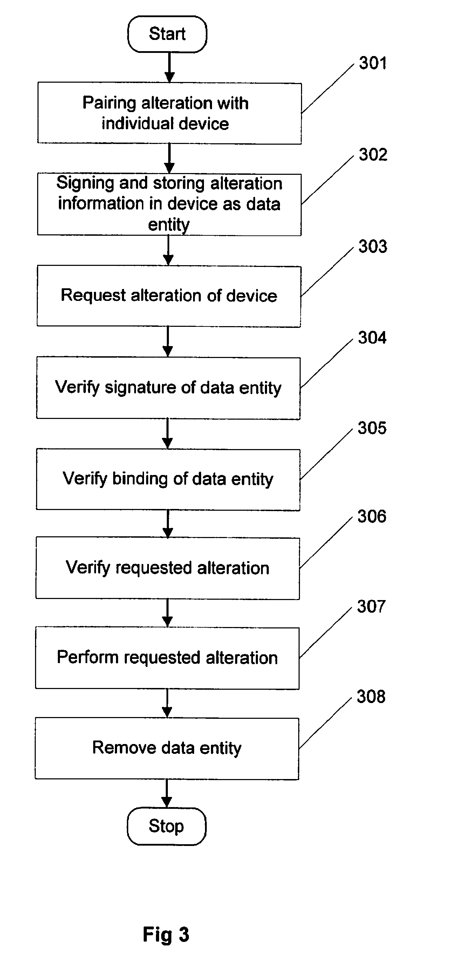

One embodiment of the method according to the invention is shown as a flow chart in figure 3. At an advanced service centre 15 a data entity 23 is prepared to be inserted in a mobile device 10. The advanced service centre 15 has or obtains from an operator the allowed SIM lock settings to be paired with an individual mobile device 10, step 301.

The data entity 23 is digitally signed as discussed above. If the data entity 23 is already locked to the IMEI of the intended replacement device, it does not require (further) authentication. In one embodiment, a MAC is calculated, as discussed above. Then, the signed data entity 23 is stored in the replacement mobile device 10, step 302.

Then the replacement mobile device 10 is shipped to a local service centre 17 suitably having tools to access the replacement mobile device 10 but limited access right and possibilities as restricted by the data entity 23. When a person has a broken phone with a SIM lock, he may have it replaced with such a replacement mobile device 10 at the local service centre 17. The local service centre 17 finds out the SIM lock settings of the broken phone, e.g. from a data base provided by the operator for instance based on the IMEI of the broken phone or subscriber number. These settings are to be set or installed in the replacement mobile device 10.

In step 303 a request for alteration of the replacement device is sent in the form of a command to update the SIM lock data of the replacement ME. This command could be sent as an AT command or via a dedicated program referred to earlier as a loader denoted by 24 downloaded into the working memory 14. A loader 24 could also be prepared and stored in advance in the non-volatile memory 13 in step 302. It optionally includes a password if this is required. The new SIM lock settings are either already stored as a file in the ME file system or sent as part of the command.

In step 304, when the command is received the loader/ME software checks if a data entity 23 is present, and if present, verifies the signature of the data entity 23 to check its authenticity and integrity.

In step 305 it is checked whether the data entity 23 is bound to the specific replacement mobile device 10. Thus, the IMEI of the replacement phone (or another device unique ID value) is checked. Alternatively, the chip unique MAC of the data entity 23 is checked. If a password is required to perform the SIM lock update, the mobile device software hashes the received password and compares it to the expected hash stored in the change information in the egg.

In step 306 it is verified that the requested alteration is consistent with the allowed alterations defined in the data entity 23.

In step 307, if all checks are successful, the requested alteration is performed. The alteration would normally change the device such that no further alterations of the SIM lock settings are possible.

Alternatively, in step 308, the data entity 23, and loader 24, if used, are wiped from the ME, unless the data entity 23 allows further alterations.

In a further embodiment, the local service centre 17 has no special tool to access the replacement device 10 but only knowledge about special commands to be entered through the user interface 11 of the device 10. In this case, the allowed alterations are preloaded in the replacement device 10 in the initial pairing step 301. The alterations allowed may suitably be presented as selectable alternatives in a menu shown on the display on the device 10.

In one embodiment, the IMEI International Mobile Equipment Identity number is stored integrity protected, and is altered in a corresponding way as the SIM lock settings. However, in this case, the IMEI cannot be used as device unique ID. If there is no other data hardware identity that can be read out from the ME and be used when signing the data entity, then the data entity is suitably bound to the device by calculating the chip unique Message Authentication Code (MAC) over the egg data.

Thus, the present invention provides a method enabling alteration of SIM lock settings and other data in an efficient and secure way. The invention is also manifested in a computer program product, in other words the data entity residing in a device or stored on a medium or in a memory and intended for insertion in a device.

The previous description of particular embodiments is provided to enable persons skilled in the art to make and use the present invention. Various modifications to these embodiments will be apparent to those skilled in the art, and the generic principles defined herein may be applied to other embodiments without departing from the scope of the invention. The present invention is not intended to be limited to the embodiments shown herein but is only limited to the claims below.

## Claims

1. A method for alteration of integrity protected data in a device (10), comprising:
in the device (10), creating and storing a data entity (23) containing signed change information about allowable alterations, the change information being bound to the device (10), a certificate with a public key corresponding to the private key used to sign the change information;
accessing the device (10) and requesting alteration; verifying the requested alteration against the data entity (23);
if the verification succeeds, performing the requested alteration.

2. A method according to claim 1, further comprising:
verifying the signature of the data entity (23); and verifying that the data entity is bound to the device (10), before performing the requested alteration.

3. A method according to claim 2, wherein the data entity (23) contains a device unique value.

4. A method according to claim 2, wherein the data entity (23) contains a chip unique MAC calculated over the data entity (23).

5. A method according to claim 1, further comprising:
if the verification succeeds, disabling further alterations by deleting or alteration of the data entity (23).

6. A method according to any one of the preceding claims, wherein the device (10) is accessed from a computer (PC).

7. A method according to claim 6, wherein the device (10) is accessed by means of AT commands.

8. A method according to claim 6, wherein the device (10) is accessed by means of a program (24) loaded into the device (10).

9. A method according to claim 6, wherein the requested alteration is sent from the computer, as part of a command or a program (24).

10. A method according to any one of the preceding claims, further comprising
in the device (10), storing possible alterations.

11. A method according to claim 10, wherein the device (10) is accessed by means of a user interface (11) of the device.

12. A method according to any one of the preceding claims, the data entity (23) further comprising password information, and accessing the device (10) further comprises inputting a password, which is checked by the device (10) against the password information of the data entity (23).

13. A method according to any one of the preceding claims, wherein the requested alteration comprises a change of SIM lock.

14. A method according to claim 13, wherein the device unique value is the IMEI.

15. A method according to any one of claims 1 to 12, wherein the requested alteration comprises a change of IMEI.

16. A computer program product comprising a data entity (23) containing signed change information about allowable alterations for alteration of integrity protected data in a device (10), the change information being bound to the device (10), and a certificate with a public key corresponding to the private key used to sign the change information.

17. A computer program product according to claim 16, wherein the data entity (23) contains a device unique value.

18. A computer program product according to claim 17, wherein the device unique value is an IMEI.

19. A computer program product according to claim 16, wherein the data entity (23) contains a chip unique MAC calculated over the data entity (23).

20. A computer program product according to claim 16, 17, 18 or 19, wherein the data entity (23) further comprises password information.

21. A computer program product according to any one of claims 16 to 20, comprising a computer-readable medium having stored thereon the data entity (23).

22. A device (10), **characterised by** comprising a computer program product according to any one of claims 16 to 20.
